# EUROPEAN PATENT APPLICATION

(11) **EP 4 119 208 A1**
(43) Date of publication of application: **18.01.2023**
(21) Application number: 20924676.8
(22) Date of filing: 09.03.2020
(51) Int. Cl.: A63F 13/35, A63F 13/355

(54) **IMAGE PROCESSING SYSTEM, PROGRAM, AND IMAGE PROCESSING METHOD**

(71) Applicant: A.L.I. Technologies Inc., Tokyo 105-0011 (JP)
(72) Inventor: KOMATSU Shuhei, Tokyo 105-0011 (JP)
(74) Representative: Ipside
(86) International application number: PCT/JP2020/009993
(87) International publication number: WO 2021/181454

(57) **Abstract**

To allow a user to easily enjoy a game regardless of an image processing capability of a user terminal or a game processing server.

Provided is an image processing system 1 configured to perform real-time rendering of an image of a game that is to be displayed on a display unit of a user terminal, the image processing system 1 including: a game processing server 10 including an acquisition unit 101 configured to acquire information inputted with regard to the game, an arithmetic processing unit 102 configured to execute arithmetic processing of the game based on the information inputted, and a result output unit 103 configured to output a result of the arithmetic processing that the arithmetic processing unit 102 has executed; and one or more rendering servers 20 including a rendering unit 201 configured to generate information related to the image of the game based on the result of the arithmetic processing, the information generated when the arithmetic processing of the game has been executed, and an image information output unit 202 configured to acquire from the rendering unit 201 the information related to the image of the game that the rendering unit 201 has generated, so as to output to the user terminal the information related to the image of the game.

## Description

### Technical Field

The present disclosure relates to an image processing system, a program, and an image processing method.

### Background Art

In recent games or the like, while an advanced graphic design is provided, a real-time rendering method has been developed such that realistic feeling of being part of the games is not spoiled (see Patent Literature 1).

### Citation List

### Patent Literature

Patent Literature 1: JP 2005 -122742 A

### Summary of Invention

### Technical Problem

Such a rendering capability is prone to be affected by a processing capability of a game processing server or a user terminal. Thus, for example, when an image processing capability of the game processing server or the user terminal is low, due to processing failure or latency between players, a user may not fully enjoy the game.

The present disclosure has been devised in view of the respects described above, and an object of the present disclosure is to provide an image processing system, a program, and an image processing method, by each of which the user easily enjoys the game without being affected by the image processing capability.

### Solution to Problem

The present disclosure provides an image processing system to perform real-time rendering of an image of a game that is to be displayed on a display unit of a user terminal, the image processing system including: a game processing server including an acquisition unit configured to acquire information inputted with regard to the game, an arithmetic processing unit configured to execute arithmetic processing of the game based on the information inputted, and a result output unit configured to output a result of the arithmetic processing that the arithmetic processing unit has executed; and one or more rendering servers including a rendering unit configured to generate information related to the image of the game based on the result of the arithmetic processing, the information generated when the arithmetic processing of the game has been executed, and an image information output unit configured to acquire from the rendering unit the information related to the image of the game that the rendering unit has generated, so as to output to the user terminal the information related to the image of the game.

The present disclosure provides a program to cause an image processing system to function to perform real-time rendering of an image of a game that is to be displayed on a display unit of a user terminal, wherein the image processing system includes a game processing server and one or more rendering servers, the game processing server functioning as an acquisition unit configured to acquire information inputted with regard to the game, an arithmetic processing unit configured to execute arithmetic processing of the game based on the information inputted, and a result output unit configured to output a result of the arithmetic processing that the arithmetic processing unit has executed, the one or more rendering servers functioning as a rendering unit configured to generate information related to the image of the game based on the result of the arithmetic processing, the information generated when the arithmetic processing of the game has been executed, and an image information output unit configured to acquire from the rendering unit the information related to the image of the game that the rendering unit has generated, so as to output to the user terminal the information related to the image of the game.

The present disclosure provides an image processing method to perform real-time rendering of an image of a game that is to be displayed on a display unit of a user terminal, the image processing method performed by a processor of a game processing server including: acquiring information inputted with regard to the game; executing arithmetic processing of the game based on the information inputted; and outputting a result of the arithmetic processing executed, the image processing method performed by one or more processors of a rendering server including: generating information related to the image of the game based on the result of the arithmetic processing, the information generated when the arithmetic processing of the game has been executed; and outputting the information generated related to the image of the game from the rendering server to the user terminal.

### Advantageous Effects of Invention

The present invention provides an image processing system, a program, and an image processing method, by each of which a user easily enjoys a game without being affected by an image processing capability of a game processing server or a user terminal.

### Brief Description of Drawings

Fig. 1 is a diagram illustrating an example of a configuration of an image processing system 1 according to an embodiment of the present disclosure.
Fig. 2 is a diagram illustrating an example of a configuration of a hardware system of a computer functioning as a game processing server 10 according to the embodiment.
Fig. 3 is a diagram illustrating an example of a configuration of a software system of each of the game processing server 10, a rendering server 20, and a user terminal 30 according to the embodiment.
Fig. 4 is a flowchart related to a series of control procedures in the image processing system 1 according to the embodiment.
Fig. 5 is a diagram illustrating an example of a configuration of a software system of each of a game processing server 10, a rendering server 20, and a user terminal 30' according to a modification of the embodiment.

### Description of Embodiments

A preferred embodiment of the present disclosure will be described in detail below with reference to drawings appended hereto. Note that, in this description and the drawings, same names and reference signs represent identical or equivalent components or functions, and a detailed description thereof will be omitted as appropriate.

### <Overview of system>

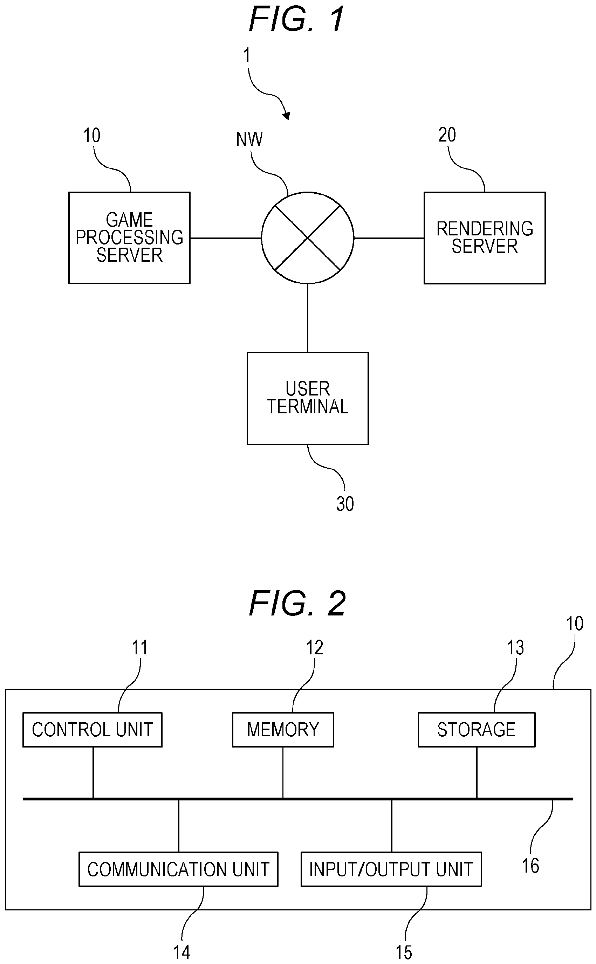

Fig. 1 is a diagram illustrating an example of a configuration of an image processing system 1 according to an embodiment of the present disclosure. The image processing system 1 according to this embodiment includes a game processing server 10 and a rendering server 20. A user terminal 30 corresponds to an information processing device through which a user uses the image processing system 1 to enjoy a game. The game processing server 10, the rendering server 20, and the user terminal 30 are communicably connected via a network NW. Note that, this configuration is exemplary and thus, one configuration may be combined with another configuration or may include another configuration.

In this embodiment, the network NW is assumed to be an internet network. The network NW is, for example, a public telephone network, a mobile telephone network, a wireless communication network, an Ethernet (registered trademark), or others.

The game processing server 10 is configured to manage a program and/or data for a game and perform event processing based on a command from the user. The game processing server 10 may be functioned by, for example, a single or a plurality of computers. Alternatively, the game processing server 10 may be logically functioned by cloud computing. For example, among game engines (e.g., Unity), the game processing server 10 has a function to perform processing inside the game, such as a physics engine. Note that, the game processing server 10 may perform any other output processing (such as audio reproduction or output of a signal to vibrate an input device, e.g., a controller of the user terminal 30) than rendering processing (drawing processing) as will be described later.

The rendering server 20 is configured to perform the rendering processing based on information related to an event received from the game processing server 10, so as to generate an image of the game. The rendering server 20 may be functioned by, for example, the single or the plurality of computers. Alternatively, the rendering server 20 may be logically functioned by the cloud computing. The rendering server 20 may include a plurality of graphics processing unit (GPU)s to perform distributed processing. For example, among the game engines, the rendering server 20 has a function to perform the rendering processing, such as various graphics engines.

The user terminal 30 corresponds to a terminal that the user uses to enjoy the game that the game processing server 10 provides. The user terminal 30 may be, for example, a mobile phone, a smartphone, a tablet computer, a game machine, or a personal computer.

An overview of the image processing system 1 according to this embodiment will be described. The image processing system 1 here is assumed to be used in any game such as an action game, a role playing game, or a shooting game where a character performs action, e.g., moving or attacking, in a virtual space. The virtual space may be, for example, a three-dimensional virtual space. When a plurality of the users play the game in the virtual space of this type, real-time rendering is required. In the virtual space here, an amount of information held in a screen where a virtual camera projects the virtual space, the information including a view point or a movement of the character and others, is extremely large. In this state, the screen requires an increased load of the real-time rendering.

In view of this, the image processing system 1 according to this embodiment has a configuration where one server performs the event processing of the game and the other server performs the real-time rendering. Here, the rendering server 20 according to this embodiment performs the rendering processing, and outputs to the user terminal 30 the image generated based on the rendering processing in, for example, a streaming format. The event processing of the game and the rendering processing of the image are separately performed. Accordingly, it is possible, by fully preparing processors (e.g., the GPUs) for the rendering processing, to allocate the increased load of the real-time rendering to the rendering server 20. Here, the game processing server 10 is not required to undertake the increased load of the real-time rendering but configured only to perform the other processing and output the result thereof to the user terminal 30. With the image processing system 1 of this type, regardless of processing capability of the user terminal 30, the rendering processing is less prone to cause a delay in processing steps, and the game remains operable, thereby allowing the user to enjoy the game. Further, a game developer is no longer required to consider a restriction in game development (the restriction caused by the rendering processing capability), which leads to a wider range of the game development. The image processing system 1 according to this embodiment will be described below.

### <Description of this embodiment>

Fig. 2 is a diagram illustrating an example of a configuration of a hardware system of the computer functioning as the game processing server 10 according to this embodiment. The computer includes at least a control unit 11, a memory 12, a storage 13, a communication unit 14, an input/output unit 15, and others. The control unit 11, the memory 12, the storage 13, the communication unit 14, and the input/output unit 15 are electrically connected to each other via a bus 16.

The control unit 11 corresponds to an arithmetic processing device configured to control an entire operation of the game processing server 10, such as controlling transmission and receipt of data between each element, and performing information processing required to execute and authenticate an application. For example, the control unit 11 is a processor such as a central processing unit (CPU) or the GPU, and executes a program or others stored in the storage 13 and loaded in the memory 12 to perform each of the information processing steps.

The memory 12 includes a main storage as a volatile storage device, e.g., a dynamic random access memory (DRAM), and an auxiliary storage as a nonvolatile storage device, e.g., a flash memory or a hard disc drive (HDD). The memory 12 is used as a work area or others of the control unit 11, and stores a basic input/output system (BIOS) that is executed when the game processing server 10 is started up, and information related to various settings.

The storage 13 stores various programs such as an application program. In the storage 13, a database for storing the data used in each of the processing steps may be constructed.

The communication unit 14 connects the game processing server 10 to the network. The communication unit 14 communicates with an external device directly or via a network access point by, for example, a wired local area network (LAN), a wireless LAN, Wireless Fidelity (Wi-Fi, registered trademark), infrared communication, Bluetooth (registered trademark), or short-range/contactless communication.

The input/output unit 15 corresponds to, for example, an information input device such as a keyboard, a mouse, or a touch panel, as well as an output device such as a display.

The bus 16 is commonly connected to each of the elements described above, and transmits to the corresponding element, for example, an address signal, a data signal, and various control signals.

A computer, a smartphone terminal device, or others functioning as each of the rendering server 20 and the user terminal 30 according to this embodiment has the same configuration of hardware system as that of the game processing server 10 illustrated in Fig. 2 and thus, a detailed description thereof will be omitted as appropriate. When the user terminal 30 is a game machine, for example, the input/output unit 15 may use a controller or a microphone as an input device. Concurrently, when the user terminal 30 is the game machine, for example, the input/output unit 15 may use a speaker or a display unit, such as an external display device or a television, as an output device.

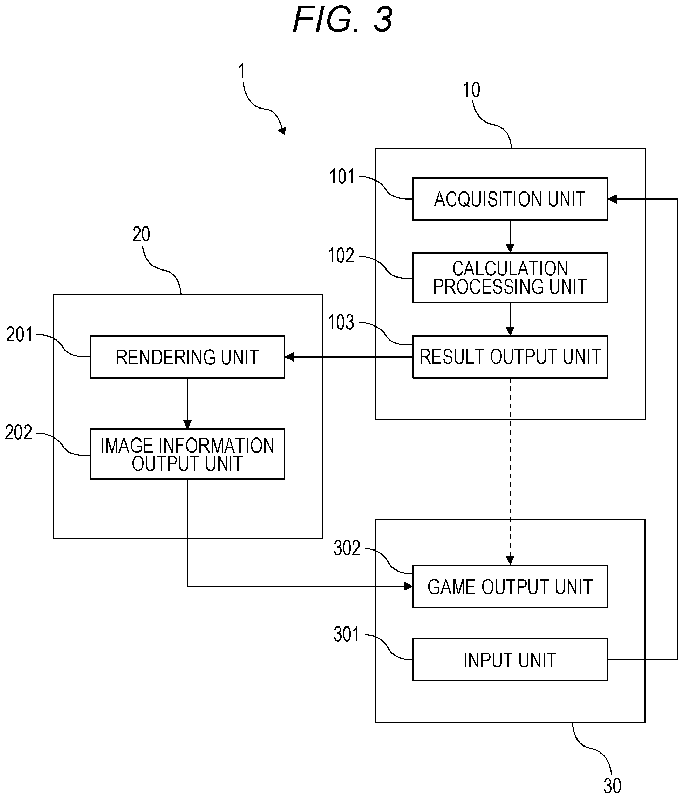

Fig. 3 is a diagram illustrating an example of a configuration of a software system of each of the game processing server 10, the rendering server 20, and the user terminal 30 according to this embodiment. As illustrated in Fig. 3, the game processing server 10 includes an acquisition unit 101, an arithmetic processing unit 102, and a result output unit 103. The rendering server 20 includes a rendering unit 201 and an image information output unit 202. The user terminal 30 includes an input unit 301 and a game output unit 302. Each of the game processing server 10, the rendering server 20, and the user terminal 30 has, for example, a processor (e.g., the control unit 11) causing a corresponding one of these units to fulfill a function thereof.

The acquisition unit 101 has a function to acquire input information related to the game. The input information may be, for example, information based on operational input related to the game. The operational input may be, for example, an input performed by the input device (e.g., the controller or a touch panel) to the user terminal 30. The information based on the operational input may be, for example, a command related to the game. The command may be, for example, designed in the game for the moving or action of the character, or designed to change the viewpoint of the character or a viewpoint of the virtual camera. Here, a type of the command is not particularly limited. Alternatively, the input information may be, for example, information inputted by the input unit 301 to the user terminal 30, such as information inputted to change the various settings during the game. Further, the input information may be, not only the information inputted to the user terminal 30, but also information based on the command that is issued related to the game in the game processing server 10. Having acquired the input information, the acquisition unit 101 outputs the input information to the arithmetic processing unit 102.

Based on the input information, the arithmetic processing unit 102 has a function to execute arithmetic processing of the game. The arithmetic processing unit 102 executes the arithmetic processing based on, for example, the command included in the input information, the command related to the viewpoint of the character or the viewpoint of the virtual camera that projects the virtual space. Here, a type of the arithmetic processing is not particularly limited and may correspond to, for example, arithmetic processing performed by a known game engine. Further, the arithmetic processing may be performed by, not only the known game engine, but also an original program outputted based on the input information related to, for example, the character, a background or a field in the virtual space. Note that, in this embodiment, among the arithmetic processing, the rendering processing is performed by the rendering server 20 as will be described later. The arithmetic processing unit 102 outputs a result of the arithmetic processing (processing result) to the result output unit 103.

The result output unit 103 has a function to output the processing result obtained, the result based on the arithmetic processing that the arithmetic processing unit 102 has executed. The result output unit 103 outputs the processing result to, for example, the rendering server 20. The processing result, which is obtained when the arithmetic processing has been executed, may include, for example, information such as a position, a posture, a direction, a size, an attribute, or status of a moving object, e.g., the character (a character operated by the user, a character operated by other users, or a CPU character) in the virtual space, or information such as a position, an orientation, or a direction of the virtual camera that projects the virtual space. The processing result, which the result output unit 103 outputs to the rendering server 20, includes information required for the rendering processing as will be described later. Note that, the result of the processing may be directly outputted to the user terminal 30.

The rendering unit 201 has a function to generate information related to the image of the game based on the processing result described above, the information generated when the arithmetic processing has been executed. In the rendering processing to generate the information related to the image of the game, for example, the rendering unit 201 may use a known graphics engine such as Open GL or Direct 3D, along with the processors such as the plurality of GPUs as hardware resources. The rendering unit 201 may perform the rendering processing based on the distributed processing using a plurality of the processors. The rendering server 20 may include the plurality of processors. Alternatively, the rendering server 20, which is configured to cause the rendering unit 201 to function, may be a plurality of cloud servers or the like.

The rendering unit 201 generates the image of the game in the virtual space projected by the virtual camera; and the virtual camera changes based on, for example, the processing result obtained when the arithmetic processing has been executed, the processing result such as a change in the information related to the position (position after the action, e.g., the moving or attacking), the direction, or the posture of the character, or a change in the action or the viewpoint of the character. The rendering unit 201 repeatedly executes the real-time rendering in each of a predetermined number of frames of the game. The predetermined number is, for example, one or more.

Having generated the information related to the image of the game (i.e., the result of the rendering process), the rendering unit 201 outputs the information to the image information output unit 202.

The image information output unit 202 has a function to output the information generated related to the image of the game to the user terminal 30. The image information output unit 202 may output the information related to the image of the game to the user terminal 30 in, for example, the streaming format. In this case, the user terminal 30 acquires a moving image in the streaming format from the rendering server 20. In other words, the information related to the image of the game here is processed into the streaming format in the image information output unit 202. With this configuration, the rendering processing is not required of the game processing server 10 or the user terminal 30, and the user is allowed to view the image of the virtual space in real time on the user terminal 30. The moving image may have its resolution adjusted. The resolution may be appropriately adjusted in accordance with, for example, a communication state of the network or capability of a graphic board of the user terminal 30, the capability to play the moving image.

The input unit 301 has a function to receive the operational input to the user terminal 30 and generate the input information based on the operational input. The input unit 301 may generate the input information based on, for example, an operation on the input device such as the touch panel or the controller included in the user terminal 30. Here, a form of the operation is not particularly limited. Alternatively, the operational input may be, for example, a sensor input obtained by various sensors included in the user terminal 30. The sensor may be, for example, an acceleration sensor, a gyro sensor, a microphone, a camera, a force sensor, a positioning sensor, or others. The input information generated by the input unit 301 may be outputted to, for example, the acquisition unit 101 of the game processing server 10.

The game output unit 302 has a function to output the image of the game outputted from the image information output unit 202. The image of the game may be, for example, the moving image in the streaming format as has been described above. The moving image may be displayed on, for example, a browser of the user terminal 30 or an application corresponding to the game. The game output unit 302 may also output sound of the game or information related to the user in the game (e.g., information indicating an increased level of the character or information indicating a change in state of a battle in the game). The game output unit 302 may output the sound or the information based on, for example, the processing result outputted from the game processing server 10. The game output unit 302 may cause the information related to the image of the game to be outputted from the rendering server 20, in synchronization with the processing result outputted from the game processing server 10.

### <Flow of processing>

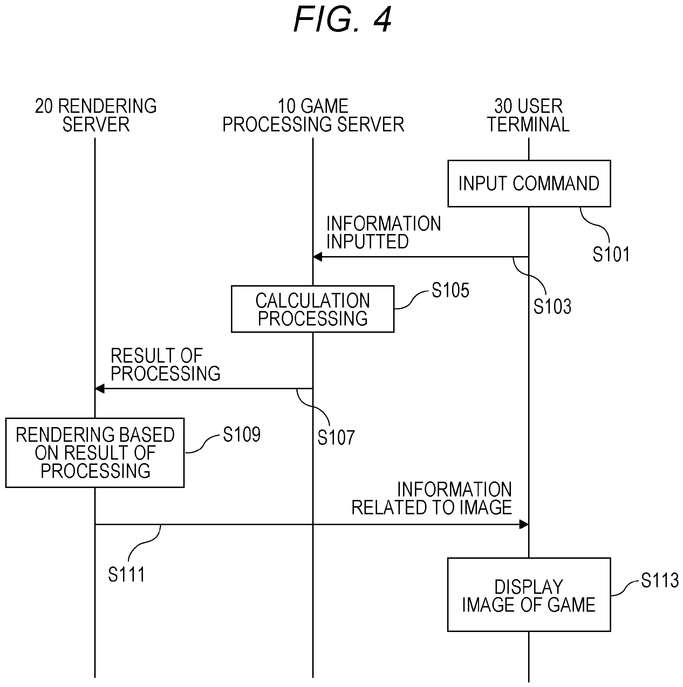

Fig. 4 is a flowchart related to a series of control procedures in the image processing system 1 according to this embodiment. Here, first, the operational input (command input) related to the game is assumed to be given to the user terminal 30 (step S101). When the command has been inputted, the user terminal 30 generates and transmits the input information to the game processing server 10 (step S103).

Next, having acquired the input information, the game processing server 10 executes the arithmetic processing of the game based on the input information (step S105). Then, the game processing server 10 transmits to the rendering server 20 the processing result of the arithmetic processing that has been executed (step S107).

Having acquired the processing result, the rendering server 20 executes the rendering processing based on the processing result (step S109). Here, the rendering processing is executed by the processor included in the rendering server 20, not by the processor included in the game processing server 10. The rendering server 20 outputs to the user terminal 30 the information related to the image of the game that has been generated based on the rendering processing (step S111). The user terminal 30 acquires the information related to the image of the game directly from the rendering server 20, not through the game processing server 10. Then, the user terminal 30 outputs the image of the game acquired (e.g., the moving image in the streaming format) (step S113).

Any one of the processing steps above is repeatedly executed as appropriate.

As has been described above, in the image processing system 1 according to this embodiment, the game processing server 10 executes the arithmetic processing based on the input information related to the game, and outputs the result of the arithmetic processing; and concurrently, the rendering server 20 other than the game processing server 10 executes the rendering processing based on the result of the arithmetic processing. For example, the input information that the user terminal 30 has generated is outputted to the game processing server 10, while the image of the game obtained based on the input information is acquired from the rendering server 20. In other words, the image processing system 1 according to this embodiment has the configuration where one server performs the game processing and the other server performs the rendering processing. The rendering processing here is executed by the processor of the rendering server 20 other than the processor of the game processing server 10.

For example, when the game subjected to the rendering processing is an online game where the plurality of users play in a three-dimensional virtual space requiring high resolution, the graphics of the large amount of information need to be generated or updated based on a plurality of pieces of the input information. Here, in a case where the processor of the game processing server 10 or the user terminal 30 executes the rendering processing, a high-performance processor is required of a provider of the game or a player of the game. In this state, the user may not easily play the game.

On the other hand, in the image processing system 1 according to this embodiment, the rendering processing, which is prone to cause a greater load than the other processing in the game, is handled solely by the other server. With this configuration, the user easily enjoys various games without being aware of the image processing capability related to graphics in the user terminal 30. Further, the game developer is no longer required to consider the restriction in the game development, the restriction caused by the rendering process, so that it is possible to easily develop the various games.

### <Modification>

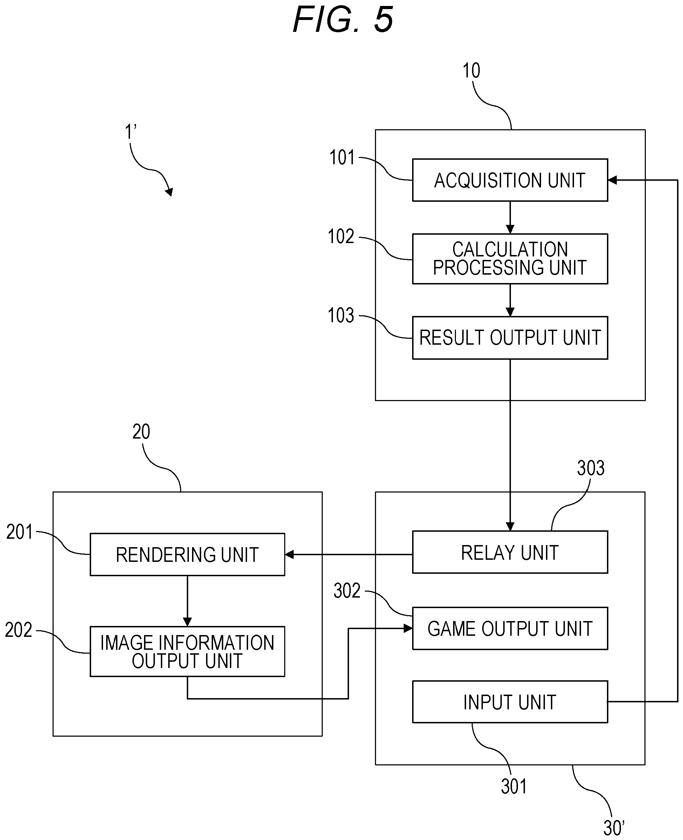

Next, an image processing system 1' according to a modification of this embodiment will be described. Fig. 5 is a diagram illustrating an example of a configuration of a software system of each of a game processing server 10, a rendering server 20, and a user terminal 30' according to the modification of this embodiment. In this modification, unlike the foregoing embodiment, the game processing server 10 outputs a processing result that is to be relayed via the user terminal 30 to the rendering server 20. Among the units included in the game processing server 10, the rendering server 20, and the user terminal 30 in Fig. 5, all the units but a relay unit 303 respectively have similar functions to those in the foregoing embodiment and thus, a detailed description thereof will be omitted as appropriate.

The relay unit 303 has a function to acquire the processing result of the arithmetic processing of the game, which the result output unit 103 of the game processing server 10 has outputted, and to output the processing result to the rendering unit 201 of the rendering server 20. In other words, in this modification, the rendering unit 201 acquires the processing result from the user terminal 30.

With this configuration, the game processing server 10 and the rendering server 20 are indirectly connected via the user terminal 30. With this configuration too, similarly to the foregoing embodiment, it is possible to separate the processor performing the processing in the game processing server 10 from the processor performing the rendering processing in the rendering server 20. Accordingly, the rendering processing, which is prone to cause the greater load, is handled solely by the rendering server 20.

A preferred embodiment of the present disclosure has been described above with reference to the drawings appended hereto. It should be noted that the preferred embodiment is for purpose of embodying a technical concept of the present disclosure and does not limit a technical scope of the present disclosure. Accordingly, it is easily understood for the one skilled in the art that any change, addition, or deletion of a configuration of each unit appropriately made within the spirit of the present disclosure will naturally fall within the technical scope of the present disclosure.

The devices described in this description may be a single device, or may be partially or wholly incorporated into a plurality of devices (e.g., the cloud servers) connected via the network. For example, the control unit and the storage of the rendering server 20 may be respectively incorporated into different servers that are connected to each other via the network.

Each of the processing steps performed by the devices in this description may be executed by any one of the software system, the hardware system, and a combination of the software system and the hardware system. A computer program configured to fulfill each of the functions of the rendering server 20 according to this embodiment may be produced and loaded in a PC or others. The computer program of this type may be stored in a computer-readable storage medium. The storage medium is, for example, a magnetic disk, an optical disk, a magneto-optical disk, or a flash memory. The computer program described above may not be stored in the storage medium but be distributed via, for example, the network.

The processing steps described with reference to the flowchart in this description may not necessarily be executed in a sequential order described in the drawing. Some of the processing steps may be concurrently executed. Further, a processing step may be additionally included in the processing steps, or some of the processing steps may be omitted.

The effects described in this description are merely illustrative or exemplary, and are not restrictive. In addition to or in place of the effect described above, any other effect described in this description or an apparent effect for those skilled in the art may be exhibited.

Note that, any one of configurations below is encompassed within the technical scope of the present disclosure.

### (Item 1)

Provided is an image processing system to perform real-time rendering of an image of a game that is to be displayed on a display unit of a user terminal.

The image processing system includes:
a game processing server including an acquisition unit configured to acquire information inputted with regard to the game, an arithmetic processing unit configured to execute arithmetic processing of the game based on the information inputted, and a result output unit configured to output a result of the arithmetic processing that the arithmetic processing unit has executed; and
one or more rendering servers including a rendering unit configured to generate information related to the image of the game based on the result of the arithmetic processing, the information generated when the arithmetic processing of the game has been executed, and an image information output unit configured to acquire from the rendering unit the information related to the image of the game that the rendering unit has generated, so as to output to the user terminal the information related to the image of the game.

### (Item 2)

In the image processing system according to item 1,
the information related to the image of the game is not outputted through the game processing server but outputted directly to the user terminal.

### (Item 3)

In the image processing system according to item 1 or 2,
the image information output unit outputs to the user terminal the information related to the image of the game in a streaming format.

### (Item 4)

In the image processing system according to any one of items 1 to 3,
the rendering unit acquires the result of the arithmetic processing from the user terminal.

### (Item 5)

In the image processing system according to any one of items 1 to 4,
the information inputted includes information obtained based on an operational input to the user terminal.

### (Item 6)

In the image processing system according to any one of items 1 to 5,
the rendering unit generates the image of the game based on distributed processing using a plurality of processors included in the rendering server.

### (Item 7)

Provided is a program to cause an image processing system to function to perform real-time rendering of an image of a game that is to be displayed on a display unit of a user terminal.

In the program,
the image processing system includes a game processing server and one or more rendering servers,
the game processing server functioning as an acquisition unit configured to acquire information inputted with regard to the game, an arithmetic processing unit configured to execute arithmetic processing of the game based on the information inputted, and a result output unit configured to output a result of the arithmetic processing that the arithmetic processing unit has executed,
the one or more rendering servers functioning as a rendering unit configured to generate information related to the image of the game based on the result of the arithmetic processing, the information generated when the arithmetic processing of the game has been executed, and an image information output unit configured to acquire from the rendering unit the information related to the image of the game that the rendering unit has generated, so as to output to the user terminal the information related to the image of the game.

### (Item 8)

Provided is an image processing method to perform real-time rendering of an image of a game that is to be displayed on a display unit of a user terminal.

The image processing method performed by a processor of a game processing server includes:
acquiring information inputted with regard to the game;
executing arithmetic processing of the game based on the information inputted; and
outputting a result of the arithmetic processing executed.

The image processing method performed by one or more processors of a rendering server includes:
generating information related to the image of the game based on the result of the arithmetic processing, the information generated when the arithmetic processing of the game has been executed; and
outputting the information generated related to the image of the game from the rendering server to the user terminal.

### Reference Signs List

- 1: image processing system
- 10: game processing server
- 11: control unit (processor)
- 20: rendering server
- 30: user terminal
- 101: acquisition unit
- 102: arithmetic processing unit
- 103: result output unit
- 201: rendering unit
- 202: image information output unit

## Claims

1. An image processing system to perform real-time rendering of an image of a game that is to be displayed on a display unit of a user terminal, the image processing system comprising:
a game processing server including
an acquisition unit configured to acquire information inputted with regard to the game,
an arithmetic processing unit configured to execute arithmetic processing of the game based on the information inputted, and
a result output unit configured to output a result of the arithmetic processing that the arithmetic processing unit has executed; and
one or more rendering servers including
a rendering unit configured to generate information related to the image of the game based on the result of the arithmetic processing, the information generated when the arithmetic processing of the game has been executed, and
an image information output unit configured to acquire from the rendering unit the information related to the image of the game that the rendering unit has generated, so as to output to the user terminal the information related to the image of the game.

2. The image processing system according to claim 1, wherein
the information related to the image of the game is not outputted through the game processing server but outputted directly to the user terminal.

3. The image processing system according to claim 1 or 2, wherein
the image information output unit outputs to the user terminal the information related to the image of the game in a streaming format.

4. The image processing system according to any one of claims 1 to 3, wherein
the rendering unit acquires the result of the arithmetic processing from the user terminal.

5. The image processing system according to any one of claims 1 to 4, wherein
the information inputted includes information obtained based on an operational input to the user terminal.

6. The image processing system according to any one of claims 1 to 5, wherein
the rendering unit generates the image of the game based on distributed processing using a plurality of processors included in the rendering server.

7. A program to cause an image processing system to function to perform real-time rendering of an image of a game that is to be displayed on a display unit of a user terminal, wherein
the image processing system includes a game processing server and one or more rendering servers,
the game processing server functioning as
an acquisition unit configured to acquire information inputted with regard to the game,
an arithmetic processing unit configured to execute arithmetic processing of the game based on the information inputted, and
a result output unit configured to output a result of the arithmetic processing that the arithmetic processing unit has executed,
the one or more rendering servers functioning as
a rendering unit configured to generate information related to the image of the game based on the result of the arithmetic processing, the information generated when the arithmetic processing of the game has been executed, and
an image information output unit configured to acquire from the rendering unit the information related to the image of the game that the rendering unit has generated, so as to output to the user terminal the information related to the image of the game.

8. An image processing method to perform real-time rendering of an image of a game that is to be displayed on a display unit of a user terminal,
the image processing method, performed by a processor of a game processing server, comprising:
acquiring information inputted with regard to the game;
executing arithmetic processing of the game based on the information inputted; and
outputting a result of the arithmetic processing executed,
the image processing method, performed by one or more processors of a rendering server, comprising:
generating information related to the image of the game based on the result of the arithmetic processing, the information generated when the arithmetic processing of the game has been executed; and
outputting the information generated related to the image of the game from the rendering server to the user terminal.
